# EUROPEAN PATENT SPECIFICATION

(11) **EP 4 375 242 B1**
(45) Date of publication and mention of the grant of the patent: **27.11.2024**
(21) Application number: 22383139.7
(22) Date of filing: 28.11.2022
(51) Int. Cl.: C02F 3/32, C02F 1/00, C02F 3/04, C02F 3/30

(54) **VERTICAL FLOW CONSTRUCTED WETLAND AND METHOD OF USE**
AUS VERTIKALER STRÖMUNG KONSTRUIERTE WETLAND UND VERWENDUNGSVERFAHREN
MARAIS HUMIDE À ÉCOULEMENT VERTICAL ET PROCÉDÉ D'UTILISATION

(43) Date of publication of application: 29.05.2024
(73) Proprietor: FCC Aqualia, S.A., 28050 Madrid (ES)
(72) Inventor: LARA CORONA, Enrique, 41003 SEVILLA (ES); BLANCO RUBIO, Iván, 45694 TALAVERA DE LA REINA (Toledo) (ES); AMADOR CABEZALI, Damián, 45694 TALAVERA DE LA REINA (Toledo) (ES); ARBIB, Zouhay, 29649 MIJAS (Málaga) (ES)
(74) Representative: Ungria López, Javier

(56) References cited:
- US-A1- 2021 171 380
- SILVEIRA D D ET AL: "Influence of partial saturation on total nitrogen removal in a single-stage French constructed wetland treating raw domestic wastewater", ECOLOGICAL ENGINEERING, ELSEVIER, AMSTERDAM, NL, vol. 77, 4 February 2015 (2015-02-04), pages 257 - 264, XP029147295, ISSN: 0925-8574, DOI: 10.1016/J.ECOLENG.2015.01.040
- AL-WAHAIBI BUTHAINA MAHFOUD ET AL: "Operational modifications of a full-scale experimental vertical flow constructed wetland with effluent recirculation to optimize total nitrogen removal", JOURNAL OF CLEANER PRODUCTION, ELSEVIER, AMSTERDAM, NL, vol. 296, 28 February 2021 (2021-02-28), XP086530409, ISSN: 0959-6526, [retrieved on 20210228], DOI: 10.1016/J.JCLEPRO.2021.126558
- ARIAS C A ET AL: "Effects of effluent recycle on treatment performance in a vertical flow constructed wetland", ECOLOGICAL ENGINEERING, ELSEVIER, AMSTERDAM, NL, vol. 180, 4 May 2022 (2022-05-04), XP087059674, ISSN: 0925-8574, [retrieved on 20220504], DOI: 10.1016/J.ECOLENG.2022.106675
- ROSENDO JOÃO CARLOS MACEDO ET AL: "Constructed wetlands applied on domestic wastewater for decetralized systems: concepts, processes, modalities, combinations and enhancements; a review", REVIEWS IN ENVIRONMENTAL SCIENCE AND BIO-TECHNOLOGY, KLUWER, DORDRECHT, NL, vol. 21, no. 2, 10 May 2022 (2022-05-10), pages 371 - 397, XP037857707, ISSN: 1569-1705, [retrieved on 20220510], DOI: 10.1007/S11157-022-09616-1
- FAN JINLIN ET AL: "Nitrogen removal in intermittently aerated vertical flow constructed wetlands: Impact of influent COD/N ratios", BIORESOURCE TECHNOLOGY, ELSEVIER, AMSTERDAM, NL, vol. 143, 19 June 2013 (2013-06-19), pages 461 - 466, XP028680252, ISSN: 0960-8524, DOI: 10.1016/J.BIORTECH.2013.06.038
- LIU GUOCHEN ET AL: "Influence of saturated zone depth and vegetation on the performance of vertical flow-constructed wetland with continuous feeding", ENVIRONMENTAL SCIENCE AND POLLUTION RESEARCH, SPRINGER BERLIN HEIDELBERG, BERLIN/HEIDELBERG, vol. 25, no. 33, 26 September 2018 (2018-09-26), pages 33286 - 33297, XP036634718, ISSN: 0944-1344, [retrieved on 20180926], DOI: 10.1007/S11356-018-3288-0
- UN-HABITAT: "Constructed Wetlands Manual", 1 April 2008, UNITED NATIONS HUMAN SETTLEMENTS, Kathmandu, ISBN: 978-92-1-131963-7

## Description

### FIELD OF THE INVENTION

The field of the present invention is that of wastewater and sludge treatment, particularly for small and medium communities (understood as a community having an equivalent population of equal or less than 2000 inhabitants). The invention specifically relates to a Vertical Flow Constructed Wetland (VFCW) and a method of sludge mineralization and treatment methods of wastewater using such device.

### BACKGROUND OF THE INVENTION

The prior art can be divided into three types of wetlands, which shall be discussed below:

### 1. French Vertical flow constructed wetland (VFCW)

### 2. Unsaturated-Saturated VFCW (U-S VFCW)

### 3. Forced bed aerated VFC W (FBA VFC W)

### 1. French VFCW (prior art not shown in the figures).

Most constructed wetlands currently used are the standard French VFCW which consists of (from top -the surface of the ground- to the bottom) a raw wastewater pretreatment screening for large solids (2-4 cm), a first stage with various alternately loaded gravel-filled vertical flow constructed wetland (VFCW) and a second stage of two sand-filled VFCW. The design and performances of such systems are well known (Troesch & Esser 2012. Constructed wetlands for the treatment of raw wastewater: the French experience. Sustainable Sanitation Practice 12, 9-15) and enable high levels of organic removal, suspended solids and nitrification (see Table 1). Moreover, sludge treatment is provided by the accumulation and mineralization on the surface of the first stage.

However, this standard design requires a large surface of 2m² per population equivalent (PE). In addition, the suitable material (sand) for filters of the second stage is not always available. Thus, the standard French design is not always economically competitive. Moreover, conventional VFCWs are all-aerobic systems, which means they cannot host denitrification anoxic processes, resulting in low total nitrogen (TN) removal. On the contrary, good nitrification rates are achieved, leading to low effluent Total Kjeldahl Nitrogen (TKN) values (<10 mg/l).

In brief, French VFCWs have three main problems: large surface required, availability of the suitable sand for the filters at the second stage, and low TN removal efficiency.

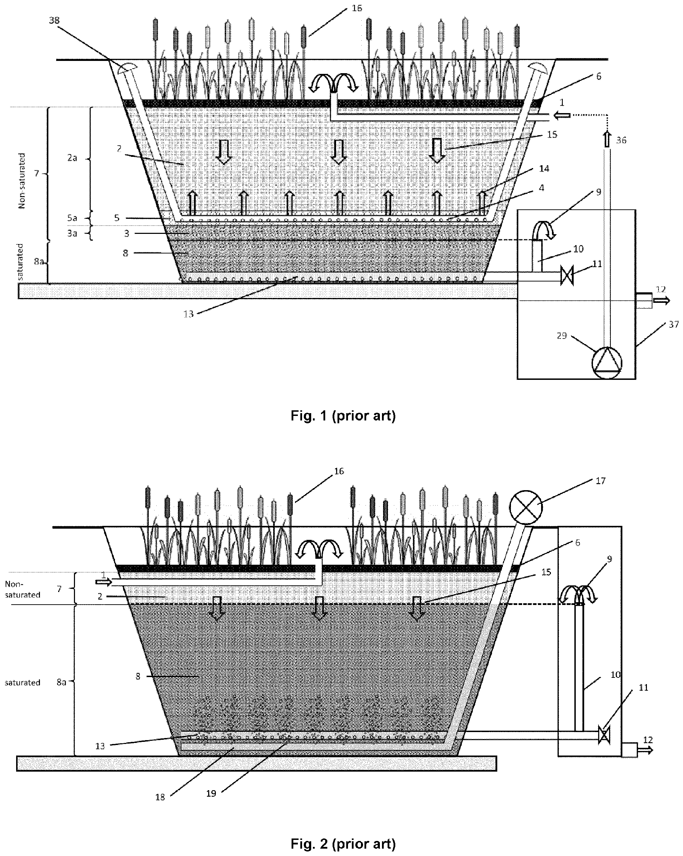

### 2. U-S VFCW (prior art, Figure 1).

Trying to solve the problems of the French VFCW, a U-S VFCW (Unsaturated - Saturated VFCW) with passive aeration has been developed by various manufacturers. The first work on this device was carried out in 2006 (Molle, P., Prost-Boucle S., Liénard A. (2006) Potential for total nitrogen removal by combining vertical flow and horizontal flow constructed wetlands: a full scale experiment study. In 10th international conference on wetlands systems for water pollution control, September 23-29, 2006 - Lisbon - Portugal) with the aim of improving overall nitrogen discharge levels and reducing the surface required.

Well-known U-S VFCW (Figure 1) with passive aeration is a single stage multilayered filter that is fed with an influent water flow, typically screened raw wastewater. Alternating feeding of various layers is similar to the feeding of different filters of the French VFCWs.

U-S VFCW filter consists of two superimposed layers or "reactors": a water-unsaturated (aerobic) layer at the surface of the ground, having a total height of 0.5 to 1 m; a water-saturated (anoxic) layer at the bottom of the system, having a total height of 0.2 to 0.6 m; and an intermediate pipe aeration network inside an intermediate or transition layer to maintain aerobic conditions in the unsaturated layer by passive aeration, i.e. upwards. The pipe aeration network consists of a series of pipes with a minimum density of (a density of at least) 0.25 ml/m² having a diameter from 100 to 160 mm and comprising slots/holes facing down connected to ventilation chimneys. The passive aeration is the convective airflow created by the temperature differential between the inner part of the wetland and the ambient air. The treatment of the sludge is provided by the accumulation and mineralization of a sludge layer on the surface, which may periodically remove. In the context of the present disclosure, "total height" or "height" when defining a layer should be understood as the thickness thereof.

Therefore, an aerobic treatment zone is formed at the top of the wetland, i.e. in the unsaturated layer, which allows the biological degradation of organic matter and a phase of nitrification of part of the ammoniacal nitrogen. The upper, unsaturated layer, which is a filtration layer made up of plants, typically macrophytes planted with an upper filtration layer of gravel with a granulometry between 2/8 and 2/4 mm over a thickness that can vary from 0.3 m to 0.8 m depending on the manufacturers and the objectives, percolates the injected raw water downwards uniformly. The transition or intermediate layer is made up of coarse gravel with a granulometry (or distribution of the size of the grains) between 4/20 mm and 10/20 mm, having a total height from 0.1 to 0.2 m, ensuring the passage of water from the upper filtration layer to the saturated anoxic environment of the layer below. It is in the intermediate layer that the intermediate pipe aeration network is installed.

The saturated layer is made up of a drainage material of the 20/40 mm type, over the layer having a height of between 0.2 and 0.6 m. The height of the water level at the bottom of the layer can be modified by an adjustable pipe where the effluent overflows from the layer. The drainage material can have also a non saturated part at the top with a thickness of about 0.1 to 0.2 m with gravel of the 20/40 mm type. This saturated part or zone is similar to horizontal flow filters known in the art, but with a much safer hydraulic design. Indeed, the risks of clogging are greatly reduced as the hydraulic flow section (the horizontal surface of the filter in this case) is much greater than the hydraulic section of horizontal flow filters.

The saturated part achieves an additional retention of total suspended solids (TSS) through lower flow velocities/rates and thus guarantees an effluent TSS discharge of under 25 mg/L. Anyway the saturated zone needs to be partly flushed every year to avoid clogging through a drain pipe and a drain valve. The final effluent is then recycled back to the filter influent so that the sludge deposits are retained on the filter surface.

In some cases, a recirculation means is provided to U-S VFCWs for improving nitrogen removals efficiencies by nitrification-denitrification. Recirculation rates vary between 30%, 50%, 100% and 200%. The rate of 100% is the most frequent.

U-S VFCWs design can reduce required surface up to 40% compared to a French VFCW (1.2 m²/PE vs. 2m²/PE, see Table 1). A better pollutant removal measure is also summarized in Table 1. Dissolved organic matter (represented by COD and BOD₅) and suspended solids (TSS) can meet the discharge requirements for urban waste water treatment (Directive 91/271/EEC) which are COD<125 mg/l, BOD₅<25 mg/l and TSS<35 mg/l. However, nitrification efficiency is lower than in French VFCWs (TKN< 30 mg/l) as the aerobic zone is reduced. The performances on overall nitrogen announced by the manufacturers (Effluent from 20 to 55 mg TN /l and 70% max reduction) does not meet Directive 91/271/EEC to sensitive areas for 2000-10000 PE (<15mg TN/L). This is because denitrification process at the bottom of the saturated layer requires the availability of carbon (COD/N-NO ₃ ratio> 2 - 3), but the aerobic zone at the top of the filter removes most of said carbon.

In brief the U-S VFCW can reduce surface required by 40% in comparison to French VFCWs, but removal efficiency in TKN (Effluent TKN<30 mg/l) is lower while not substantially improving TN removal (Effluent TN between 20 to 55 mg/l).

### 3. FBA VFCW (Figure 2, prior art).

A FBA VFCW (forced bed aeration VFCW, prior art), suitable for small and medium-sized communities, has also been developed by various manufacturers to reduce the surface requirements of CWs and increase removal efficiency in TN. A FBA VFCW comprises a freely percolated first unsaturated layer at the top of the surface/ground. Conventionally, the first layer may comprise plants, typically macrophytes planted over an unsaturated zone or sublayer of particulate filtering material, such as gravel with a granulometry between 2 and 4 mm and a height from 0.1 to 0.5 m. In general, the first layer of the device is suitable for receiving crude effluent, preferably screened raw effluent free of large solids. The influent water is distributed on the surface of the filtration layer, and then vertically percolates downwards uniformly, beginning the treatment of dissolved pollutions by the aerobic bacterial biomass fixed on the filtering material. A sludge layer accumulates on the surface of the filtration layer.

Below the first layer, there is a second saturated layer with a height of 1 to 2 m made of a drainage material of particulate filtering type, such as gravel having a granulometry between 10 and 20 mm, said particulate filtering material being saturated with water. Thus, when the device (i.e. the constructed wetland) is supplied with an effluent at the surface, the water percolates through the first layer, and then reaches the second layer, before finally leaving the CW through drain pipes located at the bottom part. An adjustable pipe located outside the ground that overflows the effluent from the filter can modify the height of saturated layer at the bottom of the filter.

The FBA VFCW is able to inject air upwards from the bottom of the device to the upper surfaces (countercurrent), so that the oxygen passes firstly through the second layer before reaching the first layer and then the free air. The forced aeration system comprises a compressor or a blower and a distribution pipe network, having releasing holes or orifices distributed over the entire surface of the pipe, along the bottom of the device. The blower or compressor has to supply enough air pressure to overcome the water level of the third layer located above the aeration network, typically from 1 to 2 m, thus an air pressure from 0.2 to 0.25 bar is required, giving a higher electricity consumption than in French VFCWs, typically between 0.25 and 0.35 kWh/m³ (see Table 1). The supply of oxygen favors the biological treatment of dissolved organic matter, nitrogen removal and optimizes the mineralization of sludge layer. A FBA VFCW thus makes it possible to reduce or even eliminate the risk of clogging. It is thus possible to apply larger loads than in a conventional first stage French VFCW, reducing the surface required to 0.9-1.2 m²/PE (Table 1).

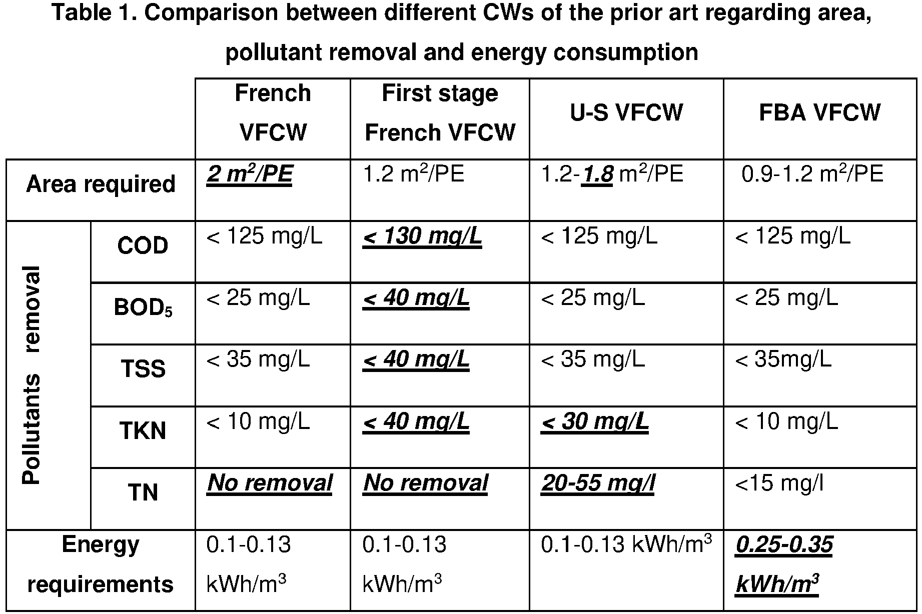

### DESCRIPTION OF THE INVENTION

The present invention is a Vertical Flow Constructed Wetland (VFCW), as in claim 1, specifically acting as a Forced bed aeration Unsaturated-Saturated VFCW (FBA U-S VFCW) showing various innovative and combined elements with respect to the prior art.

The claimed constructed wetland comprises two main superimposed zones, as "natural reactors": an upper water-unsaturated zone at the surface of the ground, and a lower drainage zone below said first zone, partially saturated with the percolated water, at the bottom of the wetland, wherein:
1) The water-unsaturated zone is configured to receive a flow of raw wastewater to be treated, distributed over the surface by an inlet pipe network, that percolates uniformly downwards from the surface of the constructed wetland to the drainage zone, and comprises different superimposed layers, from top to bottom:
   1.1) a first filtration layer of gravel with a granulometry between 2/4 mm, having a height between 0.2 m and 0.3 m upon which vegetation is planted, typically macrophytes, wherein a sludge layer is formed on the surface by accumulation and mineralization; and wherein a recirculation pipe network made up of several interconnected drip lines with drippers, of the subsurface drip irrigation (SDI) type like the ones used for crops irrigation is buried at the lower part (the bottom) of the layer, for recycling treated effluent;
   1.2) a second filtration layer of gravel with a granulometry between 4/8 mm, having a height from 0.3 m to 0.5 m;
   1.3) a transition layer of coarse gravel with a granulometry between 4/20 mm and 10/20 mm, having a height of 0.1 to 0.2 m, wherein a low pressure forced aeration device is buried at the bottom thereof, which comprises a pipe network with holes or orifices and is connected at one end to a ventilation fan with an impulsion pressure of only 0.005-0.01 bar located outside the layers, in such a way that the air of the fan is blown upwards through the holes or orifices to the upper layers (i.e. against the water flow or countercurrent); and
   1.4) an unsaturated drainage transition layer with gravel of the 20/40 mm granulometry type, having a height of 0.1 to 0.2 m in the upper part; and
2) the water-saturated drainage zone is made of a layer of gravel with granulometry of the 20/40 mm type, having a height of 0.2 to 0.6 m; wherein a horizontal drain pipe network with holes or orifices is buried at the bottom thereof, configured to collect the water already filtered out of the layers through one outlet end connected to an effluent tank; said drain pipe being also connected to a perpendicular pipe of adjustable height for controlling effluent overflow and configured to modify the height of the water level at the water-saturated zone (which must be understood as the part of the saturated layer flooded with water, whose upper limit is the water level).

The constructed wetland hereby described shows the following main innovative elements (among others) when compared with the prior art:
a) the low pressure forced aeration device comprising a pipe network buried inside the second transition water-unsaturated layer, specifically at the lower part thereof, connected at one end to a low pressure fan showing the following advantages against the prior art:
   - forced aeration instead of passive aeration, unlike U-S VFCWs; and at the same time
   - low pressure fan instead of high-pressure compressors/blowers for air injection, unlike FBA VFCW.

In prior art FBA VFCW, the air is injected counter current from the bottom of the water-saturated to the top thereof, which has to overcome water pressure above the aeration network requiring an impulsion pressure of 0.2-0.25 bar. On the contrary, thanks to the configuration of the layers and elements in the present disclosure, only a fan is needed to inject air in the water-unsaturated layer. A ventilation fan with an impulsion pressure of only 0.005-0.01 bar is used to overcome this small pressure drop through filter media without saturation water, thus requiring much lower energy consumption.

b) The CW of the present invention further comprises a recirculation pipe network buried at the lower part (the bottom) of the first filtration layer, for recycling treated effluent to improve nitrification-denitrification process; the recirculated (i.e. already treated) water is injected from the effluent tank to the lower part of the first filtration layer, therefore does not come into contact with the upper sludge layer, increasing treatment capacity of the whole system and avoiding clogging, thus reducing surface required. U-S VFCWs have an external recirculation rate of about 100% by recycling effluent back to mix with the influent flow of wastewater. However, in that case, the sludge layer in the surface of the filter receives about 200% influent flow which increases the possibility of clogging and thus reduces the treatment capacity of the whole constructed wetland.

Internal recirculation runs continuously in the present patent instead of by pulses like in a prior art U-S VFCW. The treated water is recirculated with a pump which collects the water from the effluent tank. The recirculation pipe network is of the subsurface drip irrigation (SDI) type, like the ones used for crops irrigation. The pipe network is made up of several interconnected drip lines with drippers especially designed to avoid roots intrusion and clogging by soil or dirt particles. An automatic flush valve is also installed at the end of the pipe lines, which automatically opens at the end or the start of the treating process and flushes debris that accumulates through the pipe network.

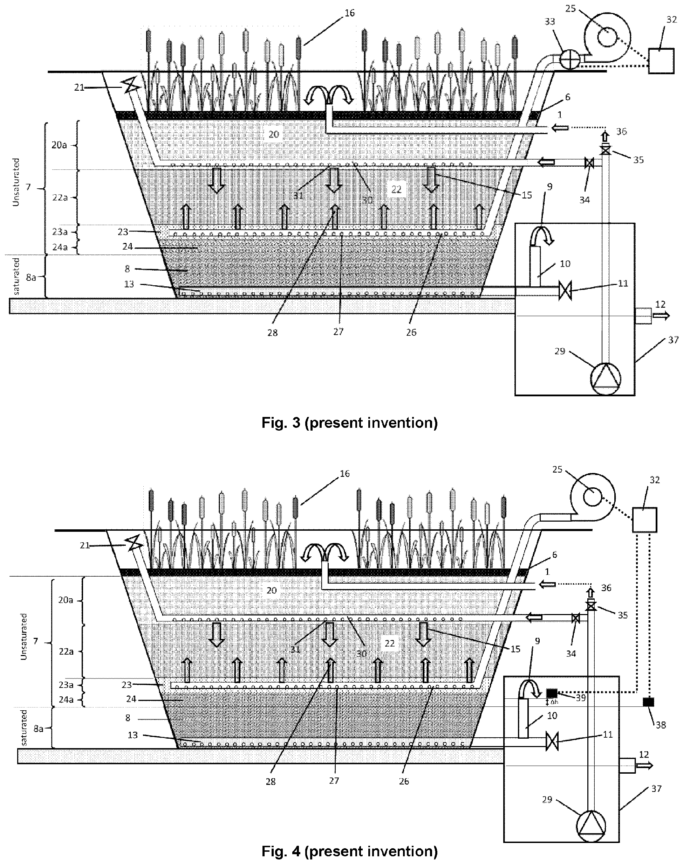

The flow of raw wastewater to be treated in the CW is injected through an inlet pipe network, configured to let the effluent flow and distribute over the surface of the ground, which is the upper part of the first filtration layer. Said inlet pipe network can be located on to the surface of the ground or buried in the first filtration layer, having in that case a vertical exit for exiting and distributing the flow over the ground (see figures 3 and 4).

The present constructed wetland may also comprise control means for detecting and avoiding clogging in the constructed wetland, by measuring either the air flow injected through the low pressure forced aeration device or the water level at the saturated layer (or even both control means). The control means are configured to regulate the air flow according to the clogging degree of the CW and to determine when maintenance of the CW is required due to total clogging. With this aim, the constructed wetland comprises an air flow meter at the impulsion exit of the fan, or alternatively two water level sensors: one for the water level of the saturated zone and one for the effluent overflow at the perpendicular pipe of adjustable height.

When the clogging of the CW increases, pressure drop also increases and fan air flow is reduced. Besides, when CW clogging increases, the water level difference between the water level of the saturated layer and the water level of the effluent overflow also increases, thus the clogging degree of the filter can be measured either by air flow or by water level difference measurements, or may include both control means.

The signals are sent either from such air flow meter at the impulsion exit of the fan or from the water level sensors to a controller, which acts on the fan motor velocity. Thanks to this configuration, the air flow at the impulsion of the fan can be increased when the CW is getting clogged, therefore an adequate aeration is provided at all times.

As a result of the innovative elements described above, the present invention meets the following goals (see Table 2):
- 50% Surface reduction of French VFCW, which is equivalent 1-1,2 m²/PE;
- Increase TKN removal of prior art U-S VFCWs to guarantee TKN<10 mg/l;
- Increase TN removal of French VFCWs and prior art U-S VFCSs to guarantee TN<20 mg/l
- Increase TSS removal of first stage French VFCW to guarantee TSS<35 mg/l
- 50% energy consumption reduction of the prior art FBA VFCWs which is equivalent to 0.12-0.15 kWh/m3

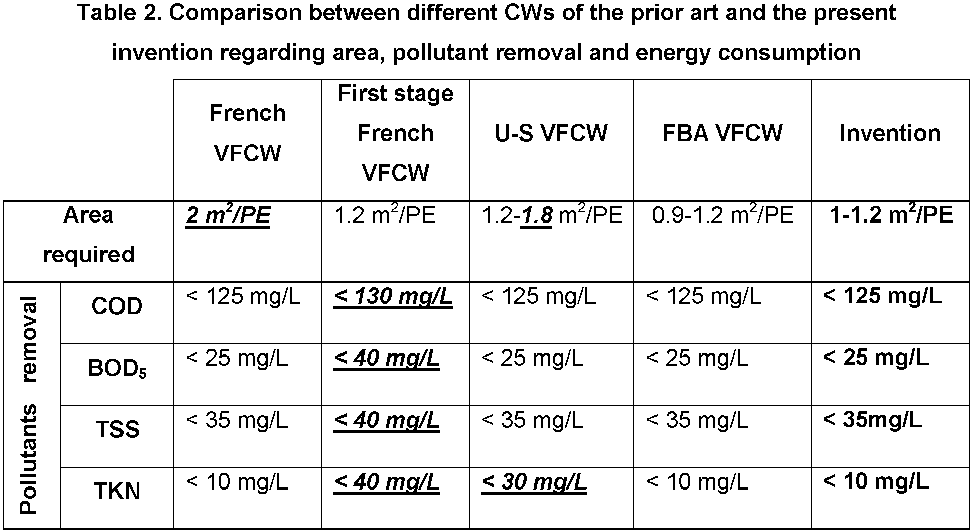

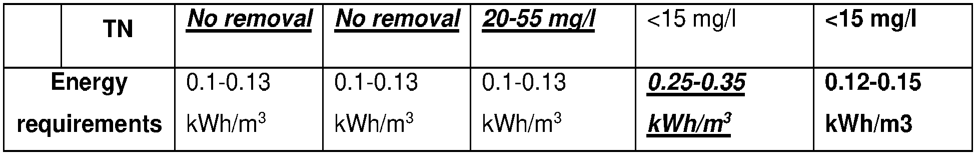

Said results shown in Table 2 were supported and provided by a field experiment with a pilot VFCW according to the description given in the Detailed Description of the invention section below. Said pilot VFCW was constructed in 2022 treating a wastewater flow of 1,6 m3/day with population equivalent 8 located at Talavera de la Reina (Toledo), Spain.

The invention, as in claim 6, also discloses a method for treating wastewater and sludge by means of the constructed wetland hereby described, said method comprising:
a) injecting a flow of wastewater by pulse through an inlet pipe network to the surface of the ground, which is the upper surface of the first filtration layer, each pulse providing a hydraulic load or water level over the filter between 2-4 cm, in such a way that the wastewater percolates uniformly downwards through the layers of the water-unsaturated zone until reaching the water-saturated zone;
b) injecting a low pressure flow of air from 0.005 bar to 0.01 bar with the ventilation fan through the aeration pipe network buried inside the transition layer, said air going upwards against the downwards water flow, thus providing aeration for biological processes involved in wastewater treatment;
c) collecting the water already filtered from the horizontal drain pipe network with holes at the bottom of the water-saturated zone to the effluent tank, through the adjustable vertical pipe; and
d) recirculating part of the treated water/effluent that leaves the CW, from the effluent tank to the recirculation pipe network of the subsurface drip irrigation (SDI) type;
wherein the fan is turned off while the pulse of wastewater is injected through the inlet pipe at start-up, for producing anoxic conditions, and subsequently the fan is turned on alternately for completing nitrification-denitrification process, with durations that depend on the characteristics of the influent wastewater, and the requirements of the treated water intended to be discharged, such durations being optimized during the starting up of the constructed wetland. For instance, in an embodiment, the parameters to be measured regarding the inlet flow of wastewater can be TSS, TN, TKN and organic matter (COD, BOD5), among others.

The denitrification process requires the availability of carbon (COD/N-NO₃ ratio> 2-3), but the aerobic zone at the top of the filter in prior art U-S VFCWs removes most of the carbon, thus reducing the efficiency of the system. On the contrary, as the ventilation fan of the present disclosure is turned off during feeding of the wastewater flow, anoxic conditions (no air enters inside the CW) are created and maintained. In this way, the inlet water percolates without the air presence and reaches the water-saturated zone at the bottom, wherein the remaining carbon available is used to further denitrify the flow of water.

Recirculation stage provides 100% recirculation rate to improve nitrification-denitrification process. The recirculation runs continuously and the flush valve opens at the start or at the end of the operation of the CW and flushes debris and dirt particulates accumulated inside the pipe network with a small amount of water.

The method further comprises partly draining the saturated zone through the drain pipe and a drain valve periodically (for instance, every year) to avoid clogging. In this embodiment, the drained water is recycled back to the inlet pipe by means of a pump, so that the sludge layer is retained on the surface of the CW. The pump for the cited drainage step can be the same as the one used for the internal recirculation step, thus having a set of valves.

The method can further comprise detecting and avoiding the clogging of the CW, through control means configured to regulate the airflow according to the clogging degree of the CW. This way, the control means help to determine when maintenance of the CW is required due to high degree of clogging. The method comprises sending signals from the water level sensor of the saturated layer and from the water level sensor of the effluent overflow, or alternatively from the air flow meter to the controller, which acts over the fan motor velocity, increasing or reducing flow proportionally to filter clogging or sending an alarm when the filter is totally clogged.

The air flow meter measures the fan air flow, a flow that is proportional to the clogging degree of the CW; that is to say, when the CW becomes clogged, pressure drop increases and fan air flow is reduced. Alternatively, pressure drop across the CW can be also be measured by the water level difference represented by Δh between water level of the saturated zone and water level of the effluent overflow. In other words, when the clogging of the CW increases, Δh also increases. Signals from the water level sensor of the saturated zone and the water level sensor of the effluent overflow or the air flow meter at the exit of the fan are sent to the controller which acts over the fan motor velocity, increasing or reducing flow proportionally to filter clogging or, alternatively, sending an alarm when the filter is totally clogged and manual cleaning of the CW is required.

### BRIEF DESCRIPTION OF THE FIGURES

Next, to facilitate a better understanding of the description of the invention and forming an integral part of it, some figures are attached in which the object of the invention has been represented by way of illustration and not limitation, and compared with embodiments of the prior art.
**Figure 1** **(prior art).** It shows a front view of a common U-S VFCW.
   1. Inlet pipe for the wastewater flow
   2. Unsaturated filtration layer
   2a. Height of the upper unsaturated filtration layer
   3. Unsaturated Drainage layer
   3a Height of the unsaturated drainage layer
   4 Intermediate aeration layer
   5. Intermediate non saturated layer
   6. Sludge layer
   7. Height of the non saturated layer
   8. Saturated drainage zone/layer
   8a. Height of the saturated drainage zone/layer
   9. Effluent overflow
   10. Adjustable pipe
   11. Drain valve
   12. Final effluent
   13. Drain pipe
   14. Passive aeration
   15. Downwards wastewater vertical flow
   16. Plants
   29. Recycling pump
   36. Mixture of water and solids from flushing
   37. Effluent tank
   38. Ventilation chimneys
**Figure 2** **(prior art).** It shows a front view of a common FBA VFCW.
   17. Blower
   18. Aeration pipe network
   19. Orifices of the aeration pipe network
**Figure 3** **(present invention).** It shows a from view of a FBA U-S VFCW in a first embodiment, wherein control means for avoiding clogging is included, and wherein said control means comprises and air flow meter and a controller.
   20. First filtration layer
   20a. Height of first filtration layer
   21. Flush valve
   22. Second filtration layer
   22a. Height of second filtration layer
   23. Transition layer
   23a. Height of transition layer
   24. Unsaturated drainage layer
   24a. Height of the unsaturated drainage layer
   25. Fan
   26. Forced aeration network
   27. Orifices of the forced aeration network (27)
   28. Upwards air flow direction
   29. Recycling pump
   30. Recirculation pipe network
   31. Drippers
   32. Controller
   33. Air flow meter, connected to the controller (32)
   34. Recirculation valve
   35. Flushing valve
   36. Mixture of water and solids from flushing
   37. Effluent tank
**Figure 4** **(present invention).** It shows a from view of a FBA U-S VFCW in a second embodiment, wherein control means for avoiding clogging is included, and wherein said control means comprises two water level sensors.
   38. Water level sensor of the saturated layer
   39. Water level sensor of the effluent overflow

### DETAILED DESCRIPTION OF THE INVENTION

Prior art U-S VFCW (figure 1) with passive aeration is basically a single stage filter fed with an influent (1) made up of screened raw wastewater, such filter with a saturated layer at the bottom of a first stage VFCW, that is to say, consists of two superimposed "reactors": an unsaturated (aerobic) layer at the surface with a total height (7) between 0.5 and 1 m and a saturated (anoxic) layer at the bottom of the system with a total height (8) between 0.2 and 0.6 m.

An intermediate aeration network (4) is located inside an intermediate layer (5) over the upper level of the saturated part, to maintain aerobic conditions in the upper media filter by passive aeration which is the convective airflow (14) created by the temperature differential between the media filter and the ambient air. The pipe aeration network consists of a series of pipes with a minimum density of 0.25 ml/m² having a diameter from 100 to 160 mm and slots/holes facing down connected to ventilation chimneys (38).

The sludge treatment is provided by the accumulation and mineralization of a sludge layer (6) on the surface, which is removed from time to time.

The aerobic zone at the top of the filter allows the biological degradation of organic matter and a phase of nitrification of part of the ammoniacal nitrogen. The unsaturated layer percolates the raw water uniformly downwards (15) and it is made up of plants (16), typically macrophytes planted with an upper filtration layer (2) of gravel with a granulometry between 2/8 and 2/4 mm over a thickness (2a) that can vary from 0.3 m to 0.8 m depending on the manufacturers and the objectives. A transition layer (5) made up of gravel with a granulometry between 4/20 mm and 10/20 mm, having a high (5a) of 0.1 to 0.2 m ensures the passage from the filtration layer to the water-saturated and anoxic environment of the filter. It is in this layer that the intermediate aeration network (4) is installed.

The saturated drainage zone (8) is made up of a layer of gravel with a granulometry of 20/40 mm, and a height (8a) of 0.2 to 0.6 m. The height (8a) of the water level at the bottom of the filter can be modified by an adjustable pipe (10) where the effluent overflows (9) from the filter. The saturated drainage zone (8) can have also a non saturated drainage layer (3) at the top having a height (3a) of about 0.1 to 0.2 m with gravel of the 20/40 mm type.

This saturated drainage zone (8) is similar to horizontal flow filters but with a much safer hydraulic design. Indeed, the risks of clogging are greatly reduced as the hydraulic flow section (the horizontal surface of the filter in this case) is much greater than the hydraulic section of horizontal flow filters. The saturated part achieves an additional retention of SS through lower flow velocities and thus guarantees an effluent TSS discharge of under 25 mg/L.

Anyway the saturated zone needs to be partly flushed every year to avoid clogging through a drain pipe (13) and a drain valve (11). The mixture of water and solids (36) from flushing is then recycled back with a recycling pump (29) to the filter influent (1) so that the sludge deposits are retained on the sludge layer (6) of filter surface. A recirculation rate of about 100% is provided to U-S VFCWs to improve nitrogen removals efficiencies by nitrification-denitrification

A FBA VFCW prior art, (figure 2) having a freely percolated first stage at the top. Conventionally, the first stage may comprise plants (16), typically macrophytes planted in an unsaturated layer (2) of particulate filtering material, such as gravel with a particle size between 2 and 4 mm and a height (7) from 0.1 to 0.5 m. In general, the first stage of the device is suitable for receiving crude influent (1), preferably screened raw effluent free of large solids. The water is distributed on the surface of the filter supplied, then vertically percolates uniformly downwards (15), beginning the treatment of dissolved pollutions by the aerobic bacterial biomass fixed on the supports. A sludge layer (6) accumulates on the filter surface.

Below the first stage there is a second stage with a saturated drainage layer (8) with a height (8a) of 1 to 2 m of particulate filtering material, such as gravel between 10 and 20 mm, such filtering material being water saturated with the forced aeration system at the bottom. Thus, when the device is supplied with effluent, the water percolates through the first stage, and then it reaches the second stage, or lower stage, before being discharged from the bottom out of the device through drain pipes (13). The height of water (8a) at the bottom of the filter can be modified by an adjustable pipe (10) that overflows the effluent (9) from the filter.

The FBA VFCW is able to inject air from the bottom of the device, so that the oxygen passes through the second stage before reaching the first stage and then the free air. The forced aeration system comprises a compressor or a blower (17) and a distribution network of pipes (18) with releasing orifices (19) distributed over the entire surface of the bottom of the device. The blower or compressor (17) has to supply enough air pressure to overcome the water level of the second stage above the aeration network, typically from 1 to 2 m, thus an air pressure from 0.2 to 0.25 bar is required, giving a higher electricity consumption than a French VFCWs, typically between 0.25 and 0.35 kWh/m3 (see table 1).

The supply of oxygen favors the biological treatment of dissolved organic matter and nitrogen removal and also optimizes the mineralization of sludge layer (6).

The present invention is a FBA U-S VFCW (Forced bed aeration Unsaturated-Saturated VFCW, figures 3 and 4 in two embodiments) which consists of two superimposed "reactors": an unsaturated zone at the surface of the ground and a saturated drainage zone below, at the bottom of the whole device.

The unsaturated zone having a determined total height (7) percolates the injected raw water uniformly downwards and it is made of different layers:
- a first filtration layer (20) of gravel with a granulometry between 2/4 mm having a height (20a) that can vary from 0.2 m to 0.3 m. It has vegetation planted (16) on top, typically macrophytes; and wherein a sludge layer (6) is formed because the sludge treatment is provided by the accumulation and mineralization of a layer on the surface of the filter, due to the aerobic conditions that are improved by the fan (25). In this embodiment, an inlet pipe network is configured to let the wastewater flow and distribute over the ground. It is at the lower part of this layer that an internal recirculation pipe network is installed (30) for the recirculation of treated water, which is recirculated with a pump (29) which collects the water from the effluent tank (37) in a continuous operation. The recirculation pipe network is of the subsurface drip irrigation (SDI) type, like the one commonly used for crops irrigation. The pipe network is made up of several interconnected driplines with drippers (31) especially designed to avoid roots intrusion and clogging by soil or dirt particles. An automatic flush valve (21) is also installed at the end of the pipe line. The automatic flush valve (21) automatically opens at the end or the start of the process and flushes debris that accumulates through the pipe network with small amounts of water;
- a second filtration layer (22) of gravel with a granulometry between 4/8, having a height (22a) that can vary from 0.3 m to 0.5 m;
- a transition layer (23) made up of coarse gravel with a granulometry between 4/20 mm and 10/20 mm, having a height (23a) of between 0.1 and 0.2 m, which ensures the passage from the second filtration layer (22) to the unsaturated drainage layer (24) and anoxic environment of the filter. It is in this layer (23) that a forced aeration network (26) having orifices (27) to let the airflow exits upwards (28) is installed and buried, with a ventilation fan (25) connected at one of its ends; and
- an unsaturated drainage layer (24) with gravel of the 20/40 mm type, having a height (24a) of 0.1 to 0.2 m in the upper part.

The saturated drainage zone (8) that is immediately below the unsaturated drainage layer (24) is made up of gravel of the 20/40 mm type, i.e. as the upper one, but having a height (8a) of 0.2 to 0.6 m and showing anoxic conditions. It has a drain pipe network (13) buried at the bottom thereof, with holes for collecting the treated water out of the filter, to the effluent tank (37). An adjustable vertical effluent overflow pipe (10) connected to the drain pipe network (13) modifies the height of the water saturated level at this saturated layer (8). A drainage valve (11) is used to empty the filter for maintenance purposes, when necessary.

The operating mode in describe below.

Various filters in parallel are alternately fed like in French VFCWs with pulses. Each pulse will provide a hydraulic load between 2 and 4 cm.

A flow of raw wastewater (1) fed to the filter percolates uniformly downwards (15) through different layers of the unsaturated zone (7). At the beginning, the ventilation fan (25) is turned off during feeding to maintain anoxic conditions. Water reaches the saturated drainage zone (8) at the bottom, where, the carbon still available is used to further denitrify. Treated water (9) goes out of the filter through a drain pipe (13) and effluent overflow pipe (10) while drain valve (11) is closed and reaches the effluent tank (37) where the recirculation pump (29) is installed and final effluent (12) is discharged.

Internal recirculation provides 100% recirculation rate to improve nitrification-denitrification process. The recirculation pump (29) collects treated water from the effluent tank (37) and pumps the water by the recirculation pipe network (30) and holes (31) to distribute the water inside the first transition layer (21) while the recirculation valve (34) is open and the flushing valve (35) is closed. Recirculation runs in a continuous mode while the fan (25) is turned on during recirculation to provide aerobic conditions as required for nitrification. The fan (25) will be on/off alternately the rest of the time with durations that depend on the nitrogen concentration to complete nitrification-denitrification processes while improving mineralization of the sludge layer (6).

The saturated zone (8) will be partly flushed every year to avoid clogging through a drain pipe (13). During the flushing, a drain valve (11) opens, the flushing valve (35) opens, the recycling valve (34) closes and the recycling pump (29) is in operation in order to recycle back the mixture of water and solids (36) to the headworks of the plant to mix with the filter influent (1) so that the sludge deposits are retained on the sludge layer (6) during feeding.

Control means for detecting and avoiding clogging in a first embodiment (figure 3) comprises an air flow meter (33) which measures fan air flow, which is proportional to pressure drop across forced ventilation layer or, what is the same, the clogging degree of the filter. In other words, when the filtering layer becomes clogged, pressure drop increases and fan air flow is reduced. Signal from the air flow meter (33) is sent to a controller (32) which acts over the fan (25) increasing or reducing the air flow proportionally to filter clogging or sending an alarm when the filter is totally clogged for maintenance purposes.

Alternatively pressure drop across the forced ventilation layer in a second embodiment (figure 4) can also be measured by the water level difference represented by Δh between the water level of the saturated zone and the water level of the effluent overflow measured at the vertical effluent overflow pipe (10). In other words, when the filter becomes clogged, Δh increases. Signals from the water level sensor of the saturated zone (38), and the water level sensor of the effluent overflow (39) are sent to a controller (32) which acts over the fan (25), increasing or reducing the air flow proportionally to the filter clogging or sending an alarm when the filter is totally clogged, for maintenance purposes.

## Claims

1. A Vertical Flow Constructed Wetland (VFCW) comprising two superimposed zones, an upper water-unsaturated zone having a height (7) and a lower drainage zone (8) having a height (8a) at the bottom of the wetland saturated with water; and an inlet pipe network (1) configured to receive a flow of raw wastewater and distribute said flow over the upper water-unsaturated zone, **characterized in that**:
1) the water-unsaturated zone is made of five layers, comprising, from top to bottom:
1.1) a sludge layer (6) located at the surface thereof, having vegetation (16) planted on top; supported onto
1.2) an upper, first filtration layer (20) of a height (20a) between 0.2 m and 0.3 m, made of gravel with a granulometry between 2/4 mm,
1.3) a second filtration layer (22), having a height (22a) from 0.3 m to 0.5 m and made of gravel with a granulometry between 4/8 mm, located below the first filtration sublayer (20);
1.4) a transition layer (23) having a height (23a) of 0.1 to 0.2 m and made of coarse gravel with a granulometry between 4/20 mm and 10/20 mm, located below the second filtration sublayer (22) and comprising:
- a low pressure forced aeration device comprising:
· an aeration pipe network (26) with orifices (27), buried at the bottom of said layer (23), connected at one end to
· a ventilation fan (25) with an impulsion pressure of 0.005-0.01 bar located outside the constructed wetland,
configured to blow air from the fan through the orifices upwards (28) towards the upper contiguous layer (22)s; and
1.5) an unsaturated drainage transition layer (24), located below the transition layer (23), having a height (24a) of 0.1 to 0.2 m, made of gravel having a granulometry of 20/40 mm;
2) the water-saturated drainage zone (8) has a height (8a) of 0.2 to 0.6 m and comprises:
- a single layer of gravel with granulometry of the 20/40 mm type with the height (8a);
- a horizontal drain pipe network (13) with orifices, buried in said gravel and configured to collect the water already filtered and to let said filtered water leave out of the constructed wetland through one outlet end of the pipe; and wherein the constructed wetland further comprises:
- an effluent tank (37), outside the constructed wetland, connected to the outlet end of the horizontal drain pipe network (13) for collecting the filtered water;
- a pipe of adjustable height located outside the constructed wetland, perpendicularly connected to the horizontal drain pipe network (13) and configured to overflow the filtered water (9) and to modify the height of the water level at the water-saturated layer (8);
- a recirculation pipe network (30), buried at the lower part of the first filtration layer (20) and connected at one end to a pump (29) located inside the effluent tank (37) and at the other end to a flash valve (21), said pipe network (30) being made up of several interconnected drip lines with drippers (31) for injecting downwards (15) and said pipe network (30) being configured to avoid roots intrusion and clogging by soil or dirt particles, and said pipe network (30) being configured to recirculate part of the filtered water into the first filtration sublayer (20).

2. The Vertical Flow Constructed Wetland of claim 1, wherein the filtered water recirculation pipe network (30) comprises an automatic flush valve (21) installed at the second end of the pipe (30) configured to open for flushing debris accumulated through the recirculation pipe network (30).

3. The Vertical Flow Constructed Wetland of any one of claims 1 or 2, wherein it comprises control means for detecting and avoiding clogging, said control means comprising an air flow meter (33) at the impulsion exit of the fan (25), connected to a controller (32), configured to act on the fan (25) velocity.

4. The Vertical Flow Constructed Wetland of any one of claims 1 to 2, wherein it comprises control means for detecting and avoiding clogging, said control means comprising two water level sensors (38, 39): one (38) for the water level of the saturated drainage layer (8) and one (39) for the filtered water overflow at the perpendicular pipe of adjustable height (10); both control means connected to a controller (32), configured to act on the fan (25) velocity.

5. The Vertical Flow Constructed Wetland of any one of claims 1 to 4, wherein it comprises drainage means for partly draining the saturated layer (8) to avoid accumulation of solids and clogging, said drainage means made of
- a drain valve (11) located at the drain pipe (13),
- a flushing valve (35), connected at one end to the pump (29) located inside the effluent tank (37) and at the second end to the inlet pipe network (1),
- and also having a recirculation valve (34) located at the recirculation pipe network (30),
wherein the valves (34, 35) are configured to open and close alternatively for injecting the flow of filtered water either to the recirculation pipe network (30) or to the inlet pipe network (1).

6. A method for treating wastewater and sludge by means of the Vertical Flow Constructed Wetland according to any one of claims 1 to 5, wherein the method comprises:
a) injecting a flow of wastewater by pulse through the inlet pipe network (1) to the surface of the sludge layer (6), each pulse providing a hydraulic load or water level over the filter between 2-4 cm, in such a way that the wastewater percolates downwards through the layers (20, 22, 23) of the water-unsaturated zone until reaching the water-saturated layer (8);
b) collecting the filtered water through the orifices of the horizontal drain pipe network (13) up to the effluent tank (37) via the one outlet end of the pipe (13) and/or via overflow of the adjustable vertical pipe (10) into the effluent tank (37) ; and
c) recirculating continuously part of the filtered water that leaves the constructed wetland to the first filtration layer (20), from the effluent tank (37) to the recirculation pipe network 30);
wherein, after anoxic conditions are produced due to the pulse of wastewater injected through the inlet pipe network (1) the process comprises:
- injecting a pressure flow of air from 0.005 bar to 0.01 bar with the ventilation fan (25) of the low pressure forced aeration device through the aeration pipe network (26) buried in the transition sublayer (23), said air going upwards (28) against the downwards water flow, thus providing aeration for biological processes involved in wastewater treatment; in such a way that the fan (25) is turned on alternately for completing nitrification-denitrification process, with durations that depend on the characteristics of the influent wastewater, and the requirements of the filtered water to be treated.

7. The method for treating wastewater and sludge of claim 6, wherein part of the filtered water is recirculated into the first filtration sublayer (20), opening the flush valve (21) at the start or at the end of the method for flushing debris and dirt particulates accumulated inside the recirculation pipe network (30) with water.

8. The method for treating wastewater and sludge of any one of claims 6 or 7, wherein it comprises a drainage step for partly draining the saturated layer (8) periodically to avoid clogging, said step comprising alternatively opening the drain valve (11) and the flush valve (35) and closing the recirculation valve (34), in such a way that the filtered water is recycled back to the inlet pipe network (1) by means of the pump (29) located inside the effluent tank (37), instead of recirculated to the recirculation pipe network (30), so that the sludge layer (6) is retained on the surface of the constructed wetland.

9. The method for treating wastewater and sludge of any one of claims 6 to 8, wherein it comprises detecting and avoiding the clogging, through control means configured to regulate the air flow according to the clogging degree.

10. The method for treating wastewater and sludge of claim 9, wherein the step of detecting and avoiding the clogging comprises sending signals from the water level sensor of the saturated layer (38) and from the water level sensor of the effluent overflow (39) to a controller (32), which acts over the fan (25) velocity, increasing or reducing flow proportionally to filter clogging or sending an alarm when the filter is totally clogged.

11. The method for treating wastewater and sludge of claim 10, wherein the step of detecting and avoiding the clogging comprises sending signals from an air flow meter (33) to the controller (32), which acts over the fan (25) velocity, increasing or reducing flow proportionally to filter clogging or sending an alarm when the filter is totally clogged.

## Patentansprüche

1. Vertikal durchströmte Pflanzenkläranlage (Vertical Flow Constructed Wetland - VFCW), die zwei übereinander angeordnete Zonen, d.h. eine obere, nicht mit Wasser gesättigte Zone (7) mit einer Höhe sowie eine untere Abflusszone (8) mit einer Höhe (8a) an der Unterseite des mit Wasser gesättigten Feuchtgebietes, sowie ein Einlauf-Rohrnetz (1) umfasst, das so ausgeführt ist, dass es einen Strom von unbehandeltem Abwasser aufnimmt und den Strom über die obere, nicht mit Wasser gesättigte Zone verteilt, **dadurch gekennzeichnet, dass:**
1) die nicht mit Wasser gesättigte Zone aus fünf Schichten besteht, die, von oben nach unten umfassen:
1.1) eine Schlamm-Schicht (6), die sich an ihrer Oberfläche befindet und auf die Pflanzen (16) gepflanzt sind; die getragen wird von
1.2) einer oberen, ersten Filtrier-Schicht (20) mit einer Höhe (20a) zwischen 0,2 m und 0,3 m, die aus Kies mit einer Korngröße zwischen 2/4 mm besteht,
1.3) eine zweite Filtrier-Schicht (22) mit einer Höhe (22a) von 0,3 m bis 0,5 m, die aus Kies mit einer Korngröße zwischen 4/8 mm besteht und sich unterhalb der ersten Filtrier-Schicht (20) befindet;
1.4) eine Übergangsschicht (23) mit einer Höhe (23a) von 0,1 m bis 0,2 m, die aus grobem Kies mit einer Korngröße zwischen 4/20 mm und 10/20 mm besteht und sich unterhalb der zweiten Filtrier-Schicht (22) befindet, wobei sie umfasst:
- eine Vorrichtung für Niederdruck-Zwangsbelüftung, die umfasst:
• ein Belüftungs-Rohrnetz (26) mit Öffnungen (27), das an dem unteren Ende der Schicht (23) eingegraben und an einem Ende verbunden ist mit
• einem Belüftungsgebläse (25) mit einem Impuls-Druck von 0,005 - 0,001 bar, das sich außerhalb der Pflanzenkläranlage befindet und so ausgeführt ist, dass es Luft von dem Gebläse durch die Öffnungen nach oben (28) in Richtung der oberen angrenzenden Schicht (22) bläst; sowie
1.5) eine ungesättigte Abfluss-Übergangsschicht (24), die sich unterhalb der Übergangsschicht (23) befindet eine Höhe (24a) von 0,1 bis 0,2 m hat und aus Kies mit einer Korngröße von 20/40 mm besteht;
2) die mit Wasser gesättigte Abflusszone (8) eine Höhe (8a) von 0,2 bis 0,6 m hat und umfasst:
- eine einzelne Schicht aus Kies vom Typ mit der Korngröße 20/40 mm mit der Höhe (8a);
- ein horizontales Ablauf-Rohrnetz (13) mit Öffnungen, das in dem Kies eingegraben und so ausgeführt ist, dass es das bereits gefilterte Wasser sammelt und das gefilterten Wasser über einen Auslass-Ende des Rohres aus der Pflanzenkläranlage austreten lässt;
und wobei die Pflanzenkläranlage des Weiteren umfasst:
- einen Abwassertank (37) außerhalb der Pflanzenkläranlage, der mit dem Auslass-Ende des horizontalen Ablauf-Rohrnetzes (13) verbunden ist und das gefilterte Wasser sammelt;
- ein Rohr mit verstellbarer Höhe, das sich außerhalb der Pflanzenkläranlage befindet, senkrecht mit dem horizontalen Ablauf-Rohrnetz (13) verbunden und so ausgeführt ist, dass es das gefilterte Wasser (9) überlaufen lässt und die Höhe des Wasserpegels in der mit Wasser gesättigten Schicht (8) verändert;
- ein Rückführungs-Rohrnetz (30), das in dem unteren Teil der ersten Filtrier-Schicht (20) eingegraben und an einem Ende mit einer Pumpe (29), die sich im Inneren des Abwassertanks (37) befindet, und an dem anderen Ende mit einem Spülventil (21) verbunden ist, wobei das Rohrnetz (30) aus mehreren miteinander verbundenen Riesel-Leitungen mit Rieselöffnungen (31) zum Einleiten nach unten (15) besteht und das Rohrnetz (30) so ausgeführt ist, dass es Eindringen von Wurzeln sowie Verstopfen durch Erd- oder Schmutzteilchen verhindert, und das Rohrnetz (30) so ausgeführt ist, dass es einen Teil des gefilterten Wassers in die erste Filtrier-Teilschicht (20) zurückführt.

2. Vertikal durchströmte Pflanzenkläranlage nach Anspruch 1, wobei das Rückführungs-Rohrnetz (30) für gefiltertes Wasser ein automatisches Spülventil umfasst, das an dem zweiten Ende des Rohrs (30) installiert und so ausgeführt ist, dass es angesammelte Verunreinigungen über das Rückführungs-Rohrnetz (30) ausspült.

3. Vertikal durchströmte Pflanzenkläranlage nach einem der Ansprüche 1 oder 2, wobei sie eine Steuerungseinrichtung zum Erfassen und Vermeiden von Verstopfen umfasst und die Steuerungseinrichtung einen Luft-Strömungsmesser (33) an dem Impuls-Ausgang des Gebläses (25) umfasst und mit einer Steuereinheit (32) verbunden ist, die so ausgeführt ist, dass sie die Geschwindigkeit des Gebläses (25) beeinflusst.

4. Vertikal durchströmte Pflanzenkläranlage nach einem der Ansprüche 1 bis 2, wobei sie eine Steuerungseinrichtung zum Erfassen und Vermeiden von Verstopfen umfasst, wobei die Steuerungseinrichtung zwei Wasserpegel-Sensoren (38, 39) umfasst, d.h. einen (38) für den Wasserpegel der gesättigten Abflussschicht (8) und einen (39) für den Überlauf für gefiltertes Wasser an dem senkrechten Rohr (10) mit verstellbarer Höhe; wobei beide Steuerungseinrichtungen mit einer Steuereinheit (32) verbunden sind, die so ausgeführt ist, dass sie auf die Geschwindigkeit des Gebläses (25) beeinflusst.

5. Vertikal durchströmte Pflanzenkläranlage nach einem der Ansprüche 1 bis 4, wobei sie eine Abflusseinrichtung für teilweisen Ablauf aus der gesättigten Schicht (8) umfasst, mit der Ansammlung von Feststoffen und Verstopfen vermieden wird, wobei die Abflusseinrichtung besteht aus:
- einem Ablaufventil (11), das sich an dem Ablaufrohr (13) befindet,
- einem Spülventil (35), das an einem Ende mit der im Inneren des Abwassertanks (37) befindlichen Pumpe (29) und an dem zweiten Ende mit dem Einlauf-Rohrnetz (1) verbunden ist
- und außerdem ein Rückführungs-Ventil (34) aufweist, das sich in dem Rückführungs-Rohrnetz (30) befindet,
wobei die Ventile (34, 35) so ausgeführt sind, dass sie sich abwechselnd öffnen und schließen, um den Strom von gefiltertem Wasser entweder in das Rückführungs-Rohrnetz (30) oder in das Einlauf-Rohrnetz (1) einzuleiten.

6. Verfahren zum Behandeln von Abwasser und Schlamm mittels der vertikal durchströmten Pflanzenkläranlage nach einem der Ansprüche 1 bis 5, wobei das Verfahren umfasst:
a) Aufspritzen eines Stroms von Abwasser mittels Impulsen über das Einlauf-Rohrnetz (1) auf die Oberfläche der Schlamm-Schicht (6), wobei jeder Impuls einen hydraulischen Druck oder Wasserpegel über dem Filter zwischen 2 - 4 cm so erzeugt, dass das Abwasser durch die Schichten (20, 22, 23) der nicht mit Wasser gesättigten Zone hindurchsickert, bis es die mit Wasser gesättigte Schicht (8) erreicht;
b) Einleiten des gefilterten Wassers zum Sammeln über die Öffnungen des horizontalen Ablauf-Rohrnetzes (13) bis zu dem Abwassertank über das eine Auslauf-Ende des Rohrs (13) und/oder über den Überlauf des verstellbaren vertikalen Rohrs (10) in den Abwassertank (37); sowie
c) kontinuierliches Rückführen eines Teils des gefilterten Wassers, das aus der Pflanzenkläranlage zu der ersten Filtrier-Schicht (20) austritt, von dem Abwassertank (37) zu dem Rückführungs-Rohrnetz (30);
wobei der Prozess nach Herstellen anoxischer Bedingungen aufgrund des über das Einlauf-Rohrnetz (1) eingeleiteten Impulses von Abwasser umfasst:
- Einleiten eines Stroms von Druckluft von 0,005 bis 0,01 bar mit dem Belüftungsgebläse der Vorrichtung für Niederdruck-Zwangsbelüftung über das in der Übergangs-Teilschicht (23) eingegrabene Belüftungs-Rohrnetz (26), wobei die Luft gegen den nach unten gerichteten Wasserstrom nach oben (28) gelangt und so Belüftung für mit Abwasserbehandlung zusammenhängende biologische Prozesse so bewirkt, dass das Gebläse (25) zum Abschließen eines Nitrifizierungs-Denitrifizierungs-Prozesses abwechselnd jeweils über eine Zeit angeschaltet wird, die von den Eigenschaften des einströmenden Abwassers sowie den Anforderungen des zu behandelnden gefilterten Wassers abhängt.

7. Verfahren zum Behandeln von Abwasser und Schlamm nach Anspruch 6, wobei ein Teil des gefilterten Wassers in die erste Filtrier-Teilschicht (20) zurückgeführt wird, das Spülventil (21) zum Beginn oder zum Ende des Verfahrens geöffnet wird, um im Inneren des Rückführungs-Rohrnetzes (30) angesammelte Verunreinigungen und Schmutzteilchen mit Wasser auszuspülen.

8. Verfahren zum Behandeln von Abwasser und Schlamm nach einem der Ansprüche 6 oder 7, wobei es einen Abfluss-Schritt für periodischen teilweisen Ablauf aus der gesättigten Schicht (8) umfasst, mit dem Verstopfen vermieden wird, wobei der Schritt umfasst, dass abwechselnd das Ablaufventil (11) sowie das Spülventil (35) geöffnet werden und das Rückführungsventil (34) geschlossen wird, so dass das gefilterte Wasser mittels der in dem Abwassertank (37) befindlichen Pumpe (29) zu dem Einlauf-Rohrnetz (1) zurückgeführt wird, statt es zu dem Rückführungs-Rohrnetz (30) zurückzuführen, so dass die Schlammschicht (6) an der Oberfläche der Pflanzenkläranlage gehalten wird.

9. Verfahren zum Behandeln von Abwasser und Schlamm nach einem der Ansprüche 6 bis 8, wobei es umfasst, dass das Verstopfen mittels einer Steuerungseinrichtung erfasst und vermieden wird, die so ausgeführt ist, dass sie den Luftstrom entsprechend dem Verstopfungsgrad reguliert.

10. Verfahren zum Behandeln von Abwasser und Schlamm nach Anspruch 9, wobei der Schritt zum Erfassen und Vermeiden des Verstopfens umfasst, dass Signale von dem Wasserpegel-Sensor der gesättigten Schicht (38) und von dem Wasserpegel-Sensor des Abwasser-Überlaufs (39) zu einer Steuereinheit (32) gesendet werden, die die Geschwindigkeit des Gebläses (25) beeinflusst, so dass Strom proportional zu Verstopfung eines Filters verstärkt oder verringert wird, oder eine Warnmeldung gesendet wird, wenn der Filter vollkommen verstopft ist.

11. Verfahren zum Behandeln von Abwasser und Schlamm nach Anspruch 10, wobei der Schritt zum Erfassen und Vermeiden des Verstopfens umfasst, dass Signale von einem Luft-Strömungsmesser (33) zu der Steuereinheit (32) gesendet werden, die die Geschwindigkeit des Gebläses (25) beeinflusst, so dass Strom proportional zu Verstopfung eines Filters verstärkt oder verringert wird, oder eine Warnmeldung gesendet wird, wenn der Filter vollkommen verstopft ist.

## Revendications

1. Marais artificiel à coulée verticale (VFCW) comprenant deux zones superposées, une zone supérieure non saturée d'eau ayant une hauteur (7) et une zone inférieure de drainage (8) ayant une hauteur (8a) au bas du arais artificiel saturé avec de l'eau ; et un réseau de conduites d'admission (1) configuré pour recevoir un flux d'eaux usées brutes et pour distribuer ledit flux sur la zone supérieure non saturée d'eau, **caractérisé en ce que** :
1) la zone non sature d'eau est composée de cinq couches, comprenant, de haut en bas :
1.1) une couche de boue (6) située à la surface de celle-ci, ayant de la végétation (16) plantée sur le dessus ; supportée sur
1.2) une première couche de filtration supérieure (20) d'une hauteur (20a) comprise entre 0,2 m et 0,3 m, composée de gravier d'une granulométrie comprise entre 2 et 4 mm,
1.3) une seconde couche de filtration (22), ayant une hauteur (22a) comprise entre 0,3 m et 0,5 m et composée de gravier d'une granulométrie comprise entre 4 et 8 mm, située sous la première sous-couche de filtration (20) ;
1.4) une couche de transition (23) ayant une hauteur (23a) comprise entre 0,1 et 0,2 m et composée de gros gravier d'une granulométrie comprise entre 4 et 20 mm et 10 et 20 mm, située sous la seconde sous-couche de filtration (22) et comprenant :
- un dispositif d'aération forcée à basse pression comprenant :
. un réseau de conduits d'aération (26) avec des orifices (27), enfoui au niveau de la partie inférieure de ladite couche (23), relié à une extrémité à
. un ventilateur (25) avec une pression d'impulsion de 0,005 à 0,01 bar situé à l'extérieur du marais artificiel,
configuré pour souffler de l'air depuis le ventilateur par le biais des orifices orientés vers le haut (28) vers la couche contigüe supérieure (22) ; et
1.5) une couche de transition de drainage non saturée (24), située sous la couche de transition (23), ayant une hauteur (24a) de 0,1 à 0,2 m, composée de gravier d'une granulométrie comprise entre 20 et 40 mm ;
2) la zone de drainage saturée d'eau (8) présente une hauteur (8a) comprise entre 0,2 et 0,6 m et comprend :
- une seule couche de gravier d'une granulométrie de type 20/40 mm avec la hauteur (8a) ;
- un réseau de conduites d'évacuation horizontales (13) avec des orifices, enfoui dans ledit gravier et configurées pour collecter l'eau déjà filtrée et pour laisser ladite eau filtrée sortir du marais artificiel par le biais d'une extrémité d'évacuation de la conduite ;
et dans lequel le marais artificiel comprend en outre :
- une cuve d'effluent (37), à l'extérieur du parais artificiel, reliée à l'extrémité d'évacuation du réseau de conduites d'évacuation horizontales (13) destinées à collecter l'eau filtrée ;
- une conduite de hauteur réglable située à l'extérieur du parais artificiel, reliée perpendiculairement au réseau de conduites d'évacuation horizontales (13) et configurée pour faire déborder l'eau filtrée (9) et pour modifier la hauteur du niveau d'eau au niveau de la couche saturée d'eau (8) ;
- un réseau de conduites de remise en circulation (30), enfoui au niveau de la partie inférieure de la première couche de filtration (20) et relié à une extrémité à une pompe (29) située à l'intérieur de la cuve d'effluent (37) et, à l'autre extrémité, à une soupape de vidange (21), ledit réseau de conduites (30) étant composé de plusieurs lignes de goutteurs interconnectées avec des goutteurs (31) destinés à une injection vers le bas (15), ledit réseau de conduites (30) étant configuré pour empêcher l'intrusion de racines et l'obstruction par des particules de sol ou de poussière, ledit réseau de conduites (30) étant configuré pour remettre en circulation une partie de l'eau filtrée vers la première sous-couche de filtration (20).

2. Marais artificiel à coulée verticale selon la revendication 1, dans lequel le réseau de conduites de remise en circulation de l'eau filtrée (30) comprend une soupape de vidange automatique (21) installée au niveau de la seconde extrémité de la conduite (30) configurée pour s'ouvrir afin d'évacuer les débris accumulés par le biais du réseau de conduites de remise en circulation (30).

3. Marais artificiel à coulée verticale selon l'une quelconque des revendications 1 ou 2, qui comprend un moyen de commande destiné à détecter et empêcher toute obstruction, ledit moyen de commande comprenant un débitmètre d'air (33) au niveau de la sortie d'impulsion du ventilateur (25), relié à un contrôleur (32), configuré pour agir sur la vitesse du ventilateur (25).

4. Marais artificiel à coulée verticale selon l'une quelconque des revendications 1 à 2, qui comprend un moyen de commande destiné à détecter et empêcher toute obstruction, ledit moyen de commande comprenant deux capteurs de niveau d'eau (38, 39) : un (38) pour le niveau d'eau de la couche de drainage saturée (8) et un (39) pour le débordement de l'eau filtrée au niveau de la conduite perpendiculaire à hauteur réglable (10) ; les deux moyens de commande étant reliés à un contrôleur (32), configuré pour agir sur la vitesse du ventilateur (25).

5. Marais artificiel à coulée verticale selon l'une quelconque des revendications 1 à 4, qui comprend un moyen de drainage destiné à drainer partiellement la couche saturée (8) afin d'empêcher toute accumulation de solides et toute obstruction, ledit moyen de drainage étant composé de
- une soupape de purge (11) située au niveau de la conduite d'évacuation (13),
- une soupape de vidange (35), reliée à une extrémité à la pompe (29) située à l'intérieur de la cuve d'effluent (37) et, à la seconde extrémité, au réseau de conduites d'admission (1),
- et ayant en outre une soupape de remise en circulation (34) située au niveau du réseau de conduites de remise en circulation (30),
dans lequel les soupapes (34, 35) sont configurées pour s'ouvrir et se fermer par alternance afin d'injecter le flux d'eau filtrée soit vers le réseau de conduites de remise en circulation (30), soit vers le réseau de conduites d'admission (1).

6. Procédé de traitement d'eaux usées et de boues à l'aide du marais artificiel à coulée verticale selon l'une quelconque des revendications 1 à 5, dans lequel le procédé comprend :
a) l'injection d'un flux d'eaux usées par impulsion par le biais du réseau de conduites d'admission (1) vers la surface de la couche de boues (6), chaque impulsion fournissant une charge hydraulique ou un niveau d'eau sur le filtre entre 2 et 4 cm, de sorte que les eaux usées soient lessivées vers le bas par le biais des couches (20, 22, 23) de la zone non saturée d'eau jusqu'à ce qu'elles atteignent la couche saturée d'eau (8) ;
b) la collecte de l'eau filtrée par le biais des orifices du réseau de conduites d'évacuation horizontales (13) jusqu'à la cuve d'effluent (37) via une extrémité d'évacuation de la conduite (13) et/ou via le débordement de la conduite verticale réglable (10) dans la cuve d'effluent (37) ; et
c) la remise en circulation en continu d'une partie de l'eau filtrée qui sort du marais artificiel vers la première couche de filtration (20), depuis la cuve d'effluent (37) vers le réseau de conduites de remise en circulation (30) ;
dans lequel, une fois que des conditions anoxiques se sont produites en raison de l'impulsion des eaux usées injectées par le biais du réseau de conduites d'admission (1), le processus comprend :
- l'injection d'un flux d'air sous pression de 0,005 bar à 0,01 bar avec le ventilateur (25) du dispositif d'aération forcée à basse pression par le biais du réseau de conduites d'aération (26) enfoui dans la sous-couche de transition (23), ledit air remontant (28) à l'encontre du flux d'eau descendant, assurant ainsi une aération pour les processus biologiques impliqués dans le traitement des eaux usées ; de sorte que le ventilateur (25) soit déclenché en alternance afin d'exécuter un processus de nitrification-dénitrification, avec des durées qui dépendent des caractéristiques des eaux usées entrantes, et des exigences de l'eau filtrée à traiter.

7. Procédé de traitement d'eaux usées et de boues selon la revendication 6, dans lequel une partie de l'eau filtrée est remise en circulation vers la première couche-couche de filtration (20), en ouvrant la soupape de vidange (21) au début ou à la fin du procédé afin d'évacuer les débris et les particules de poussière accumulés à l'intérieur du réseau de conduites de remise en circulation (30) avec l'eau.

8. Procédé de traitement d'eaux usées et de boues selon l'une quelconque des revendications 6 ou 7, qui comprend une étape de drainage destinée à drainer partiellement la couche saturée (8) périodiquement afin d'empêcher toute obstruction, ladite étape comprenant alternativement l'ouverture de la soupape de purge (11) et de la soupape de vidange (35) et la fermeture de la soupape de remise en circulation (34), de sorte que l'eau filtrée soit recyclée vers le réseau de conduites d'admission (1) à l'aide de la pompe (29) située à l'intérieur de la cuve d'effluent (37), au lieu d'être remise en circulation vers le réseau de conduites de remise en circulation (30), de sorte que la couche de boues (6) soit retenue à la surface du parais artificiel.

9. Procédé de traitement d'eaux usées et de boues selon l'une quelconque des revendications 6 à 8, qui comprend la détection et l'empêchement de toute obstruction, par le biais d'un moyen de commande configuré pour réguler le flux d'air selon le degré d'obstruction.

10. Procédé de traitement d'eaux usées et de boues selon la revendication 9, dans lequel l'étape de détection et d'empêchement de l'obstruction comprend l'envoi de signaux par le capteur de niveau d'eau de la couche saturée (38) et par le capteur de niveau d'eau du débordement d'effluent (39) à un contrôleur (32), qui agit sur la vitesse du ventilateur (25), en augmentant ou en réduisant le débit proportionnellement à l'obstruction du filtre, ou en envoyant une alarme lorsque le filtre est entièrement obstrué.

11. Procédé de traitement d'eaux usées et de boues selon la revendication 10, dans lequel l'étape de détection et d'empêchement de l'obstruction comprend l'envoi de signaux par un débitmètre d'air (33) au contrôleur (32), qui agit sur la vitesse du ventilateur (25), en augmentant ou en réduisant le débit proportionnellement à l'obstruction du filtre ou en envoyant une alarme lorsque le filtre est entièrement obstrué.
